(19) Europäisches Patentamt / European Patent Office / Office européen des brevets

(11) **EP 2 772 869 B1**

(12) **FASCICULE DE BREVET EUROPEEN**

(45) Date de publication et mention
de la délivrance du brevet:
**19.07.2017 Bulletin 2017/29**

(51) Int Cl.:
**G06F 21/46** *(2013.01)*

(21) Numéro de dépôt: **14156817.0**

(22) Date de dépôt: **26.02.2014**

(54) **Procédé et système de traitement cryptographique utilisant une donnée sensible**

Verfahren und System zur kryptografischen Datenverarbeitung unter Verwendung von sensiblen Daten

Method and system for cryptographic processing using sensitive data

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.02.2013 FR 1351730**

(43) Date de publication de la demande:
**03.09.2014 Bulletin 2014/36**

(73) Titulaire: **OBERTHUR TECHNOLOGIES**
**92700 Colombes (FR)**

(72) Inventeurs:
• **Dottax, Emmanuelle**
**92700 COLOMBES (FR)**
• **Sartori, Michele**
**92700 COLOMBES (FR)**

(74) Mandataire: **Santarelli**
**49, avenue des Champs-Elysées**
**75008 Paris (FR)**

(56) Documents cités:
**US-A1- 2011 296 509**

• **IMRAN ERGULER ET AL: "A Password-Based
Key Establishment Protocol with Symmetric Key
Cryptography", NETWORKING AND
COMMUNICATIONS, 2008. WIMOB '08. IEEE
INTERNATIONAL CONFERENCE ON WIRELESS
AND MOBILE COMPUTING, IEEE, PISCATAWAY,
NJ, USA, 12 octobre 2008 (2008-10-12), pages
543-548, XP031350776, ISBN: 978-0-7695-3393-3**

• **YA-JUN FAN ET AL: "Smart card-based
authenticated key exchange protocol with
CAPTCHA for wireless mobile network", FUTURE
COMPUTER AND COMMUNICATION (ICFCC),
2010 2ND INTERNATIONAL CONFERENCE ON,
IEEE, PISCATAWAY, NJ, USA, 21 mai 2010
(2010-05-21), pages V2-119, XP031698749, ISBN:
978-1-4244-5821-9**

• **JUNG-SAN LEE ET AL: "An interactive mobile
SMS confirmation method using secret sharing
technique", COMPUTERS & SECURITY,
ELSEVIER SCIENCE PUBLISHERS.
AMSTERDAM, NL, vol. 30, no. 8, 6 juillet 2011
(2011-07-06), pages 830-839, XP028106927, ISSN:
0167-4048, DOI: 10.1016/J.COSE.2011.07.001
[extrait le 2011-07-19]**

• **CHEN T H ET AL: "A novel user-participating
authentication scheme", JOURNAL OF
SYSTEMS & SOFTWARE, ELSEVIER NORTH
HOLLAND, NEW YORK, NY, US, vol. 83, no. 5, 1
mai 2010 (2010-05-01), pages 861-867,
XP026932537, ISSN: 0164-1212, DOI:
10.1016/J.JSS.2009.12.022 [extrait le 2010-01-04]**

• **WASEEM DAHER ET AL: "POSH",
PROCEEDINGS OF THE 1ST ACM WORKSHOP
ON WORKSHOP ON AISEC, AISEC '08, 1 janvier
2008 (2008-01-01), page 1, XP055088840, New
York, New York, USA DOI:
10.1145/1456377.1456379 ISBN:
978-1-60-558291-7**

## Description

<u>DOMAINE DE L'INVENTION</u>

L'invention concerne la sécurité de données sensibles, notamment lorsqu'elles sont stockées dans un environnement non sécurisé.

En particulier, l'invention concerne un traitement cryptographique utilisant une donnée sensible dans un système de traitement cryptographique et propose de sécuriser l'accès à cette donnée sensible lors de la mise en oeuvre de ce traitement.

<u>CONTEXTE DE L'INVENTION</u>

Aujourd'hui, de nombreux services sont disponibles sur des systèmes de traitement cryptographique comme par exemple des terminaux. Il arrive que l'accès à certains de ces services soit protégé par une donnée sensible telle qu'un mot de passe ou une clef cryptographique, notamment lorsque ces services font intervenir des informations sensibles telles que par exemple des coordonnées bancaires.

Le stockage de telles données sensibles est généralement requis en vue d'une authentification ultérieure ou du déchiffrage d'informations chiffrées. Dans l'idéal, il faudrait que ces données sensibles soient stockées dans une mémoire sécurisée du terminal afin d'éviter leur détournement par exemple par une application malveillante.

Or de nombreux terminaux ne disposent pas de suffisamment d'espace au sein d'une mémoire sécurisée pour stocker de telles données sensibles, ou ne comportent tout simplement pas de telle mémoire. Il peut donc être aisé pour un attaquant de récupérer ces données sensibles dans une mémoire non sécurisée et de les utiliser pour obtenir les informations sensibles utilisées par les services correspondants.

Pour compliquer les attaques par des systèmes automatiques, on souhaite éviter de manipuler le mot de passe P directement en dehors d'une éventuelle étape préalable de configuration en utilisant par exemple une valeur de hachage C de ce mot de passe, obtenue par exemple lors de cette étape de configuration à l'aide d'une fonction cryptographique F. Par exemple, C = F(P, R) où R est une valeur quelconque, par exemple aléatoire.

Une telle technique est connue du document US 2011/0296509, lequel propose une solution basée sur un défi-réponse de type CAPTCHA (« *Completely Automated Public Turing test to tell Computers and Humans Apart* ») permettant de différencier de manière automatique un utilisateur humain d'un ordinateur. La solution proposée repose sur le stockage en base de données de la valeur R et d'un défi-CAPTCHA ChalIR dont R est la réponse. En particulier, il s'agit d'utiliser une réponse R' de l'utilisateur au défi-CAPTCHA ChalIR qui lui est soumis, pour calculer C' = F(R', P'), le mot de passe P' étant également saisi par l'utilisateur. C' est ensuite comparée à C = F(P, R) calculée par un serveur à partir de la valeur R mémorisée et du mot de passe P, afin de vérifier la correspondance entre P' et P.

Une technique courante pour empêcher un attaquant de retrouver facilement le mot de passe P consiste à ne pas le stocker directement comme dans le système de US 2011/0296509 mais à le stocker indirectement via la valeur C = F(P, R), accompagnée de la valeur correspondante R.

Toutefois, on connaît les attaques par force brute consistant à récupérer C = F(P, R) et R mémorisées dans un système, puis à tester de façon automatique les différents mots de passe P possibles.

Généralement, les mots de passe P sont d'une complexité limitée. Par exemple un code PIN codé sur 4 bits ne représente que $10^4$ possibilités à tester.

Un attaquant peut donc rapidement remonter à P et aux éventuelles informations sensibles qu'il protège.

<u>RESUME DE L'INVENTION</u>

La présente invention a ainsi pour objet de pallier au moins un de ces inconvénients et est définie par les revendications indépendantes 1, 11,13 et 14. Des modes de réalisation sont définis par les revendications dépendantes 2-10,12 et 15-16. Dans ce contexte, un premier aspect de l'invention concerne un procédé de traitement cryptographique utilisant une donnée sensible dans un système de traitement cryptographique comprenant en mémoire un test permettant de différencier un humain d'un ordinateur ainsi qu'une valeur de référence obtenue en appliquant une fonction cryptographique à une paire de valeurs P et R, où P est la donnée sensible et R est une solution au test mémorisé, le procédé comprenant :

- une étape de configuration du système de traitement cryptographique, comprenant l'obtention et la mémorisation de la valeur de référence (Co) dans le système cryptographique, puis
- une étape de transmission du test mémorisé à un utilisateur,
- une étape d'obtention d'une réponse de l'utilisateur au test transmis,
- une étape de traitement cryptographique basé sur la donnée sensible, utilisant la réponse obtenue, la valeur de référence ainsi que la fonction cryptographique,

le procédé étant caractérisé en ce que la valeur de référence et le test sont en mémoire du système de traitement cryptographique et la solution n'est pas en mémoire du système, lors de l'étape de transmission.

Corrélativement, un deuxième aspect de l'invention concerne un système de traitement cryptographique comprenant :

- au moins une mémoire comprenant un test permettant de différencier un humain d'un ordinateur ainsi que la valeur de référence obtenue en appliquant une fonction cryptographique à une paire de valeurs P et R, où P est une donnée sensible et R est une solution au test,
- des moyens de configuration du système de traitement cryptographique, comprenant des moyens d'obtention et de mémorisation de la valeur de référence dans le système cryptographique, préalablement à la transmission du test mémorisé à un utilisateur,
- des moyens de transmission du test à un utilisateur,
- des moyens d'obtention d'une réponse de l'utilisateur au test transmis,
- des moyens de traitement configurés pour réaliser un traitement cryptographique basé sur la donnée sensible en utilisant la réponse obtenue, la valeur de référence ainsi que la fonction cryptographique.

Le système est caractérisé en ce qu'il comprend en mémoire la valeur de référence et le test, et ne comprend pas en mémoire la solution, lorsque les moyens de transmission sont mis en oeuvre.

En variante, le système est caractérisé en ce qu'il comprend en mémoire non volatile la valeur de référence et le test, et ne comprend pas en mémoire non volatile la solution.

Un tel système peut être un terminal, par exemple de type terminal de téléphonie mobile, un ordinateur portable ou une tablette tactile. Il peut également s'agir d'un serveur et d'un terminal dans une architecture client-serveur. Le système présente des avantages similaires au procédé selon l'invention.

L'invention permet d'améliorer la sécurité de la donnée sensible en évitant les attaques par force brute par lesquelles un système automatique attaquant ayant connaissance de la fonction cryptographique s'empare de la valeur de référence et de la valeur quelconque utilisée dans le test, toutes deux mémorisées dans un système pour en déduire de façon automatisée la donnée sensible.

Cette amélioration de la sécurité est obtenue en évitant de stocker la valeur quelconque (ici la solution) en mémoire au moment où le test correspondant est transmis à l'utilisateur, mais en stockant ce test et la valeur de référence - ou de hachage - basée sur la donnée sensible, ou en les stockant dans une mémoire non volatile. L'invention mémorise la donnée sensible et la valeur quelconque sous une forme qui permet d'éviter les attaques automatiques.

En effet, le test permet d'obtenir la valeur quelconque depuis l'utilisateur. Cette valeur quelconque et la valeur de référence stockant indirectement la donnée sensible sont alors suffisantes, avec le concours de la fonction cryptographique, pour effectuer des calculs cryptographiques basés sur la donnée sensible. Et quand bien même un attaquant récupérerait le contenu de la mémoire, il aurait besoin de l'intervention d'un humain pour résoudre le test et obtenir la solution afin de remonter à la donnée sensible.

Le test précité peut être un défi-CAPTCHA dont la solution est une réponse-CAPTCHA.

En variante, le test pourrait être tout autre moyen permettant de différencier un humain d'un ordinateur de façon automatique.

D'autres caractéristiques du procédé et du système selon des modes de réalisation de l'invention sont décrites dans les revendications dépendantes.

Dans un premier mode de réalisation de l'invention, le procédé comprend en outre une étape d'obtention d'une donnée saisie par l'utilisateur, et l'étape de traitement cryptographique comprend :

- une étape de calcul d'une valeur obtenue en appliquant la fonction cryptographique à une paire de valeurs P' et R', où P' est en la donnée saisie et R' est la réponse obtenue, et
- une étape de comparaison de la valeur calculée avec la valeur de référence, de sorte à vérifier que la donnée saisie égale la donnée sensible.

Corrélativement, le système selon l'invention peut comprendre des moyens se rapportant à ces étapes.

Ce mode de réalisation peut avantageusement prendre part à un processus d'authentification d'un utilisateur par mot de passe.

Cette configuration permet de vérifier la validité de la donnée saisie par l'utilisateur sans pour autant stocker la donnée sensible à laquelle elle doit correspondre, sécurisant ainsi des opérations d'authentification.

Dans un cas particulier de ce premier mode de réalisation, la donnée saisie peut intégrer la réponse de l'utilisateur au test. Dans ce cas, l'authentification est réalisée plus rapidement puisqu'elle permet d'économiser des échanges avec l'utilisateur car une seule étape d'obtention permet de récupérer à la fois la réponse au test et la donnée à vérifier.

Selon une caractéristique particulière, la fonction cryptographique est une fonction à sens unique.

Ainsi, il est difficile pour un attaquant de retrouver la donnée sensible à partir de cette fonction cryptographique difficile à inverser. Il est également complexe de trouver deux données distinctes telles que les valeurs obtenues en appliquant la fonction cryptographique à ces deux données soient égales.

Cette fonction peut être par exemple une simple fonction de hachage ou une fonction de hachage composée d'une autre fonction de hachage, ou une fonction SHA3, ou encore une fonction de chiffrement par bloc de type AES ou DES.

Dans un second mode de réalisation de l'invention, l'étape de traitement cryptographique comprend :

- une étape de calcul d'une valeur obtenue en appliquant une fonction réciproque de la fonction cryptographique à une paire de valeurs Co et R', où Co est la valeur de référence et R' est la réponse saisie obtenue, et

- une étape de cryptage ou de décryptage d'une information sensible utilisant la valeur calculée de la fonction réciproque.

Corrélativement, le système selon l'invention peut comprendre des moyens se rapportant à ces étapes.

Ce second mode de réalisation permet de sécuriser des informations sensibles, par exemple lors de leur stockage en vue d'un accès ou pour leur transmission après cryptage.

Selon une caractéristique particulière, la valeur calculée de la fonction réciproque est une clé de cryptage utilisée lors de l'étape de décryptage pour décrypter l'information sensible encryptée stockée en mémoire du système de traitement cryptographique.

Cela signifie que l'information sensible encryptée a été obtenue par cryptage d'une information sensible par une clef de cryptage égale à la donnée sensible.

Ce mode de réalisation permet de sécuriser l'accès à des informations sensibles, notamment lorsque la donnée sensible sert de clef de cryptage de ces informations.

En variante, l'information sensible encryptée à décrypter est la valeur calculée de la fonction réciproque, et l'étape de décryptage de la valeur calculée de la fonction réciproque comprend l'utilisation d'une clé de cryptage basée sur la réponse obtenue de l'utilisateur.

Cela signifie que la donnée sensible, c'est-à-dire l'information sensible encryptée, a été obtenue par cryptage d'une information sensible par une clef de cryptage basée sur la solution.

Ce mode de réalisation permet de sécuriser l'accès à des informations sensibles, notamment lorsque la donnée sensible constitue elle-même la version encryptée de ces informations.

Dans un mode particulier de réalisation, la fonction cryptographique et sa réciproque sont des fonctions de chiffrement asymétrique dont la paire de clés de chiffrement asymétrique est basée sur la solution au test mémorisé.

Selon une caractéristique particulière, le système de traitement cryptographique comprend en outre en mémoire un code d'authentification de message appliqué à la information sensible et ayant pour clef secrète la donnée sensible ou la solution, et en ce que la étape de traitement cryptographique comprend en outre :

- une étape de calcul d'un code d'authentification de message appliqué à la information sensible décryptée et ayant pour clef secrète la clé de cryptage calculée ou obtenue par le système de traitement cryptographique, et
- une étape de vérification de l'intégrité de l'information sensible décryptée par comparaison du code d'authentification mémorisé avec le code d'authentification calculé.

L'utilisation de codes d'authentification de message permet d'assurer un niveau de sécurité supplémentaire en vérifiant que les informations sensibles décryptées sont bien celles attendues. Une fausse clef de cryptage entrainant la compromission des informations décryptées, un attaquant qui tenterait de décrypter les informations sensibles avec une fausse clef de cryptage obtiendrait des informations erronées et donc inutiles.

Dans un mode particulier de réalisation de l'invention, la fonction cryptographique est également fonction d'un paramètre secret mémorisé dans le code d'un programme d'ordinateur.

Ce paramètre secret permet d'ajouter un degré de sécurité lors des calculs de la fonction cryptographique notamment lorsque l'on ne dispose pas de mémoire sécurisée.

Ce paramètre secret peut être mis à jour régulièrement, par exemple au démarrage du système.

Il peut par exemple être caché dans le code d'un programme d'ordinateur comprenant également le code de la fonction cryptographique, le code de cette dernière et le paramètre secret étant mémorisés de façon distincte et indépendante dans le code du programme d'ordinateur. Bien sûr, en variante, le paramètre secret peut être dans une autre mémoire (par exemple non sécurisée) que le code de la fonction cryptographique.

Dans un mode particulier de réalisation de l'invention, le procédé comprend en outre une nouvelle itération des étapes de transmission, d'obtention d'une deuxième réponse saisie par l'utilisateur et de traitement cryptographique, à l'aide d'un deuxième test permettant de différencier un humain d'un ordinateur ayant une deuxième solution et d'une deuxième valeur de référence obtenue en appliquant la fonction cryptographique à une paire de valeurs P et $R_2$, où P est la donnée sensible et $R_2$ est la deuxième solution, la deuxième valeur de référence et le deuxième test étant en mémoire du système de traitement cryptographique et la deuxième solution n'étant pas en mémoire du système lors de la étape de transmission de cette nouvelle itération.

Transmettre un nouveau test permet d'empêcher le phénomène d'apprentissage par l'attaquant et donc sécurise davantage la donnée sensible.

Dans un mode particulier de réalisation, le test ainsi que la valeur de référence de l'itération précédente sont supprimés de la mémoire du système, permettant de libérer de l'espace mémoire.

En variante, la deuxième valeur de référence peut être calculée de façon incrémentale, c'est-à-dire à partir de la valeur de référence du test précédent et de la deuxième solution, notamment sans manipuler directement la donnée sensible.

Ainsi, le calcul de la nouvelle valeur de référence ne nécessite pas d'accès à la donnée sensible, renforçant la sécurité de celle-ci.

Dans un mode particulier de réalisation, les différentes étapes du procédé de traitement cryptographique sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comprenant des instructions adaptées à la mise en oeuvre des étapes du procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comprenant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou encore un moyen d'enregistrement magnétique, par exemple une disquette (*floppy disc* en terminologie anglo-saxonne), un disque dur, ou encore une mémoire flash.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'informations peut être un circuit intégré dans lequel le programme est incorporé, le circuit étant adapté pour exécuter ou pour être utilisé dans l'exécution du procédé en question.

Le support d'informations et le programme d'ordinateur précités présentent des caractéristiques et avantages analogues au procédé qu'ils mettent en oeuvre.

## BREVE DESCRIPTION DES FIGURES

D'autres particularités et avantages de l'invention apparaîtront encore dans la description ci-après, illustrée par les figures ci-jointes qui en illustrent des exemples de réalisation dépourvus de tout caractère limitatif. Sur les figures :

- La **Figure 1** illustre plusieurs exemples de systèmes selon l'invention ;
- La **Figure 2** illustre un exemple d'architecture matérielle pour le ou les équipements des systèmes de traitement cryptographique de la figure 1 ;

- La **Figure 3** représente un organigramme illustrant des étapes générales d'un procédé de traitement cryptographique selon l'invention ;
- La **Figure 4** représente un organigramme illustrant les principales étapes d'un procédé de traitement cryptographique selon un premier mode de réalisation de l'invention ;
- La **Figure 5** illustre un exemple de défi-CAPTCHA pouvant être utilisé dans une variante du premier mode de réalisation ;
- La **Figure 6** représente un organigramme illustrant les principales étapes d'un procédé de traitement cryptographique selon un second mode de réalisation de l'invention,
- La **Figure 7** représente un organigramme illustrant les principales étapes d'un procédé de traitement cryptographique selon une variante du deuxième mode de réalisation de l'invention.

## DESCRIPTION DETAILLEE DE L'INVENTION

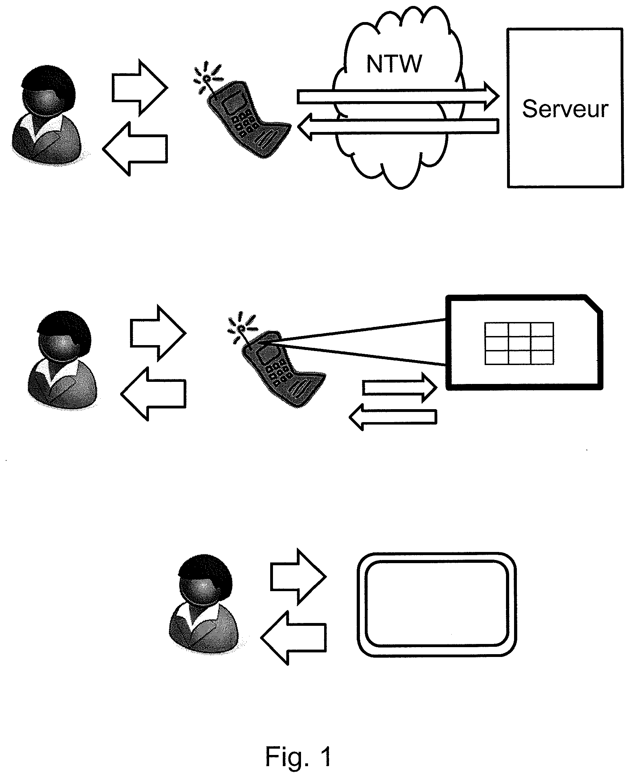

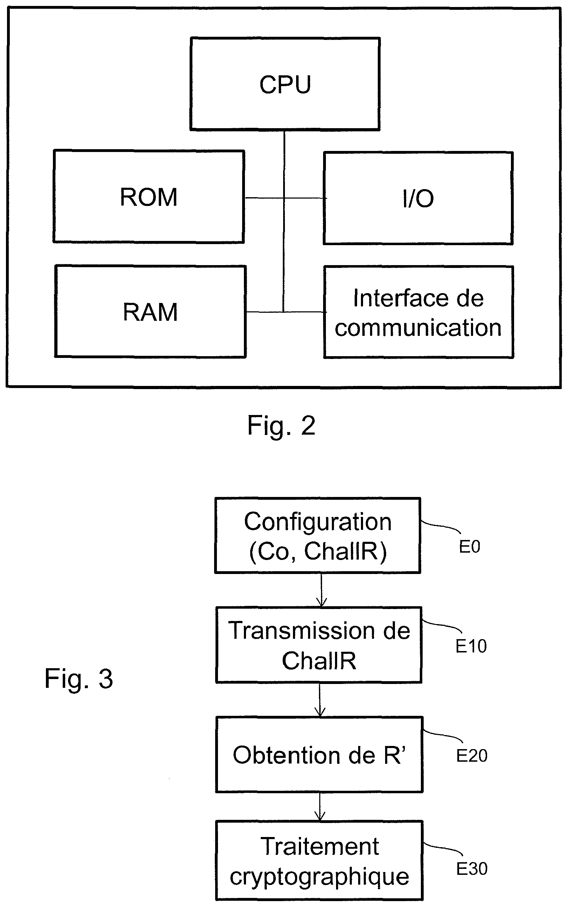

La **figure 1** illustre plusieurs exemples de systèmes de traitement cryptographique selon l'invention, adaptés à mettre en oeuvre les principales étapes d'un procédé de traitement cryptographique tel que décrit ultérieurement en référence à la **figure 3**, **4**, **6** ou **7**.

Un tel système peut comprendre un ou plusieurs équipements communiquant entre eux, dont au moins un est configuré pour permettre à un utilisateur d'interagir avec le système.

Le premier exemple représenté est un système de type client-serveur comprenant deux équipements, à savoir un serveur et un terminal de téléphonie mobile sur lequel est installé un client. Le client installé sur ce terminal communique par l'intermédiaire d'un réseau téléphonique NTW avec le serveur.

De façon générale, l'invention peut être utilisée pour sécuriser des données stockées sur un serveur.

De retour à cet exemple, le terminal de téléphonie mobile est configuré pour qu'un utilisateur puisse interagir avec le système. En effet, il est doté d'un écran et d'un clavier pouvant être confondus (écran tactile).

Les procédés selon l'invention peuvent être mis en oeuvre entièrement sur le terminal ou sur le serveur, ou être répartis sur les deux équipements.

Le second exemple de système représenté comprend un terminal mobile comprenant lui-même un élément sécurisé (*Secure Element* en terminologie anglo-saxonne) amovible par exemple une carte SIM ou embarqué par exemple un eSE.

Pour des raisons de simplicité de vocabulaire, on considère par la suite l'élément sécurisé comme un équipement comprenant une unité de traitement autonome comme il sera décrit ultérieurement en référence à la **figure 2**.

Dans cet exemple, le terminal mobile est configuré pour qu'un utilisateur puisse interagir avec lui, par exemple via un clavier et un écran possiblement confondus.

Le troisième exemple représenté est une tablette tactile. Dans ce troisième exemple, un utilisateur peut interagir avec la tablette par l'intermédiaire de son écran tactile et par exemple d'un clavier virtuel.

Ces exemples de systèmes de traitement cryptographique ne sont pas limitatifs. En effet les procédés selon l'invention peuvent être mis en oeuvre dans tout type d'équipement disposant d'une architecture telle que celle décrite ultérieurement par exemple en référence à la **figure 2**.

La **figure 2** illustre un exemple d'architecture matérielle pour le ou les équipements constitutifs d'un système de traitement cryptographique selon l'invention, par exemple tel que décrit en référence à la **figure 1**.

Dans cet exemple, l'équipement comprend un bus de communication auquel sont reliés :

- une unité de traitement -ou microprocesseur- notée CPU (sigle de *Central Processing Unit* en terminologie anglo-saxonne) ;

- une ou plusieurs mémoires non volatile par exemple ROM (acronyme de *Read Only Memory* en terminologie anglo-saxonne) pouvant constituer un support au sens de l'invention, c'est-à-dire pouvant comprendre un programme informatique comprenant des instructions pour la mise en oeuvre d'un procédé de traitement cryptographique selon l'invention ; cette mémoire non volatile peut également être une mémoire EEPROM (acronyme de *Electrically Erasable Read Only Memory* en terminologie anglo-saxonne) ou encore une mémoire Flash ;

- une mémoire vive ou mémoire cache ou mémoire volatile par exemple RAM (acronyme de *Random Access Memory* en terminologie anglo-saxonne) comprenant des registres adaptés à l'enregistrement des variables et paramètres créés et modifiés au cours de l'exécution du programme précité ; lors de la mise en oeuvre de l'invention, les codes d'instructions du programme stocké en mémoire non volatile (e.g. EEPROM ou flash) sont chargés en mémoire RAM en vue d'être exécutés par l'unité de traitement CPU ;

- une interface de communication adaptée à transmettre et à recevoir des données, par exemple via un réseau de télécommunications ou une interface de lecture/écriture d'un élément sécurisé ;

- une interface d'entrées/sorties I/O (pour *Input/Output* en terminologie anglo-saxonne), par exemple un écran, un clavier, une souris ou un autre dispositif de pointage tel qu'un écran tactile ou une télécommande ; cette interface I/O permet à l'utilisateur d'interagir avec le système au cours de la mise en oeuvre du procédé via une interface graphique.

Le bus de communication permet la communication et l'interopérabilité entre les différents éléments inclus dans l'équipement ou reliés à lui. La représentation du bus n'est pas limitative et, notamment, l'unité de traitement est susceptible de communiquer des instructions à tout élément de l'équipement directement ou par l'intermédiaire d'un autre élément de cet équipement.

La **figure 3** représente un organigramme illustrant les étapes générales d'un procédé de traitement cryptographique selon l'invention, pouvant être mis en oeuvre dans chacun des systèmes décrits précédemment en référence à la **figure 1**.

Selon les systèmes de traitement cryptographique, les différentes étapes du procédé précité sont soit mises en oeuvre par un seul équipement, soit sont réparties entre les différents équipements du système.

De façon générale, ce procédé de traitement cryptographique fait appel à des variables/paramètres stockés dans une ou plusieurs mémoires, par exemple mortes ROM, du système le mettant en oeuvre.

En particulier, la mise en oeuvre du procédé requiert la mémorisation préalable :

- d'un test permettant de différencier un humain d'un ordinateur, par exemple un test automatique de type défi-CAPTCHA ChaIIR utilisé pour obtenir d'un utilisateur une réponse R' nécessaire au traitement cryptographique, ainsi que

- d'une valeur dite de référence Co cachant une donnée sensible P (par exemple un mot de passe) à l'aide de la solution au test ici appelée réponse-CAPTCHA au défi-CAPTCHA mémorisé, Co étant utilisée par la suite pour authentifier une donnée P' obtenue d'un utilisateur ou pour participer au décryptage d'informations sensibles ou encore au cryptage de données Data.

Dans la suite de la description, pour simplifier, le test ChaIIR sera toujours un défi-CAPTCHA dont la solution est appelée réponse-CAPTCHA R. Toutefois, tout autre moyen permettant de différencier un humain d'un ordinateur de façon automatique peut être utilisé en variante.

La valeur de référence Co est le résultat obtenu en appliquant une fonction cryptographique F à une paire de valeurs P et R : $Co = F(P, R)$, où P, la donnée sensible, peut être un mot de passe ou bien une clef de cryptage ou encore une information sensible encryptée, et R est la réponse-CAPTCHA au défi-CAPTCHA précité.

En pratique, la présence de ces variables/paramètres au sein de la mémoire non volatile est le résultat d'une étape préalable de configuration E0 du système. Cette étape de configuration peut s'effectuer de différentes façons.

Une première façon consiste à récupérer ces variables/paramètres d'une entité tierce, par exemple d'un serveur ou d'un élément de stockage amovible comme une carte SD ou une clef USB, au moyen de l'interface de communication ou d'un lecteur approprié aux éléments de stockage précités, puis à mémoriser ces deux variables/paramètres Co et ChaIIR dans une ou plusieurs mémoires mortes par exemple dans la mémoire non volatile du système.

Une autre façon consiste à générer ces variables/paramètres au sein du système grâce à l'action conjointe d'une unité de traitement CPU du système et de sa mémoire vive RAM.

En particulier, les calculs du défi-CAPTCHA ChaIIR et de la valeur de référence Co sont effectués respectivement à partir d'une valeur quelconque R pouvant être générée par le système, par exemple de façon aléatoire, ou obtenue d'une entité tierce du type de celle précitée, et à partir de cette valeur quelconque, d'une fonction cryptographique F mémorisée dans le système ainsi que de la donnée sensible P obtenue préalablement et donc en mémoire.

La fonction cryptographique F peut être par exemple une fonction cryptographique basée sur une clef comme par exemple une fonction de cryptage symétrique ENCRYPT. Par exemple, la fonction F peut être une fonction de cryptage symétrique prenant comme paramètre la donnée sensible P et ayant pour clé de chiffrement la réponse R au défi-CAPTCHA ChaIIR : $Co = F(P,R) = ENCRYPT_R(P)$.

La fonction cryptographique F peut être par exemple une fonction de hachage, par exemple une fonction SHA3, ou une fonction de hachage composée d'une autre fonction de hachage, ou encore une fonction de chiffrement par bloc de type AES ou DES.

En variante, la fonction cryptographique F peut être une fonction de chiffrement asymétrique. Par exemple, la fonction F peut avoir une clé $f_1(R)$ de chiffrement basée sur la réponse R au défi-CAPTCHA ChaIIR, la clé de déchiffrement correspondante $f_2(R)$ (différente de la clé de chiffrement puisqu'il s'agit de chiffrement asymétrique) étant aussi basée sur la réponse R au défi-CAPTCHA ChaIIR. Ainsi, $Co=F(P,R)=ENCRYPT_{f1(R)}(P)$, $f_1(R)$ étant la clé asymétrique utilisée pour la fonction cryptographique ENCRYPT, appliquée à la donnée secrète.

Le couple de clés de chiffrement/déchiffrement peut comprendre une clé publique et une clé privée.

A noter que le cryptage symétrique n'est rien d'autre qu'un cryptage asymétrique où $f_1(R)=f_2(R)$.

De préférence, cette fonction cryptographique F est difficile à inverser et il doit être complexe de trouver deux données distinctes telles que les valeurs obtenues par application de la fonction cryptographique à ces deux données soient égales.

Afin de complexifier davantage cette fonction cryptographique F, celle-ci peut faire appel à un paramètre secret S mémorisé dans le code d'un programme d'ordinateur, par exemple mettant en oeuvre un procédé selon l'invention.

Pour ajouter un degré supplémentaire de complexité à cette fonction, le paramètre secret S et éventuellement le défi-CAPTCHA ChaIIR peuvent être mis à jour au démarrage du système, ou encore de façon régulière lors de son fonctionnement, par exemple à chaque itération des étapes E10 à E30.

Les variables R et P sont mémorisées dans la mémoire vive RAM le temps des calculs de configuration (étape E0) puis supprimées du système à l'issue de cette étape de configuration. Seuls les variables/paramètres calculés, à savoir Co et ChaIIR sont mémorisés durablement dans la mémoire non volatile du système dans cet exemple.

Ainsi, un attaquant de type système informatique automatique qui accéderait à la mémoire non volatile après la configuration E0 ne pourra ni récupérer directement la donnée sensible P ni résoudre le défi-CAPTCHA ChaIIR avec la réponse-CAPTCHA R. En effet, un tel système attaquant ne peut pas remonter à la valeur de P sans l'intervention d'un humain pour résoudre le défi-CAPTCHA. Il ne peut donc pas s'authentifier ou décrypter les informations sensibles précitées.

En variante, le calcul de ces variables/paramètres et leur mémorisation durable ne sont pas nécessairement réalisés par un même équipement.

Par exemple, dans le cas du client-serveur, les calculs de configuration E0 peuvent être réalisés par le serveur et les résultats mémorisés dans la mémoire non volatile du terminal de téléphonie mobile après réception de ceux-ci via le réseau NTW.

En variante, les données pourraient être stockées sur le serveur.

De même, dans le cas du terminal mobile équipé d'un élément sécurisé, les calculs peuvent être effectués par l'unité de traitement CPU de l'élément sécurisé puis leurs résultats mémorisés dans une mémoire non volatile du terminal mobile.

L'étape de configuration E0 peut également résulter d'une combinaison des méthodes exposées ci-avant.

Suite à la configuration E0, au cours d'une étape E10, le système selon l'invention transmet le défi-CAPTCHA ChaIIR mémorisé à l'étape E0 à un utilisateur, par l'intermédiaire de l'interface I/O.

Ce défi-CAPTCHA peut se matérialiser en une ou plusieurs images affichées sur un écran du système. Une forme bien connue de défi-CAPTCHA est composée d'une ou plusieurs images déformées. Il peut également s'agir d'une image représentant une opération mathématique à effectuer, dont la solution est la réponse à ce défi-CAPTCHA. Ces images peuvent être éventuellement accompagnées d'une consigne de résolution, de sorte que la solution au défi-CAPTCHA répond à une logique définie par cette consigne. Par exemple, la consigne peut être de cliquer successivement sur les images dans un ordre défini par la consigne.

En variante, il peut s'agir de l'émission d'un signal sonore très bruité ou encore d'une séquence de vibrations.

L'utilisateur est chargé de résoudre ce défi-CAPTCHA en renvoyant par l'intermédiaire par exemple d'un clavier (physique ou virtuel) ou en variante d'un microphone (réponse dictée) du système, une réponse R' reçue par ce système au cours d'une étape d'obtention E20.

Cette réponse peut consister par exemple en la retranscription d'un message contenu dans l'image affichée ou bien du message contenu dans le signal sonore bruité ou en l'indication du nombre de vibrations ressenties par l'utilisateur.

Le message de l'image affichée ou du signal sonore peut être par exemple une séquence de lettres et/ou de chiffres, un mot ou encore une phrase.

Au cours d'une étape E30, le système selon l'invention réalise un traitement cryptographique à partir notamment de la réponse obtenue R' au cours de l'étape E20, de la valeur Co et de la fonction cryptographique F.

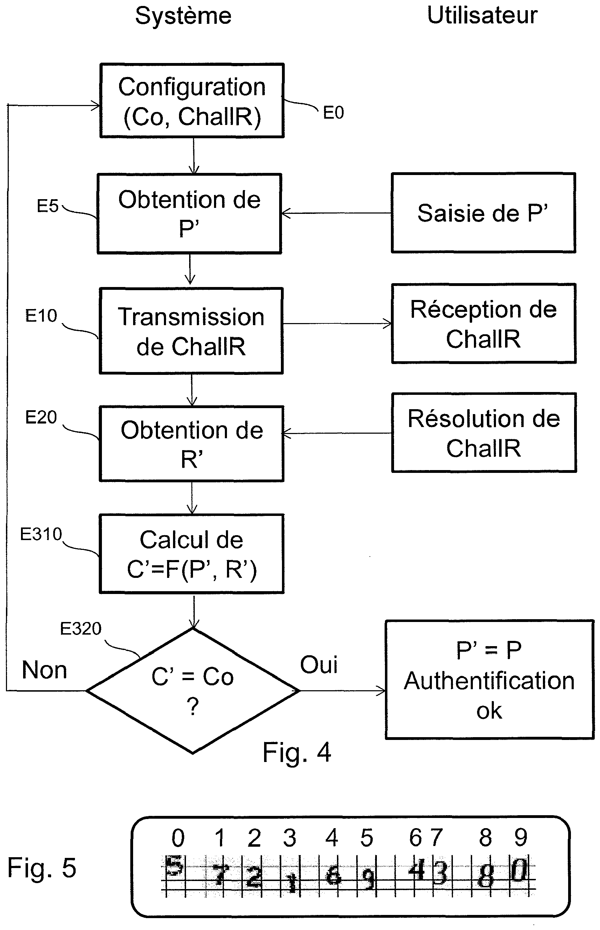

Ce traitement cryptographique peut consister à authentifier un utilisateur via un mot de passe P' saisi par celui-ci, comme il sera décrit ultérieurement en référence à la **figure 4**.

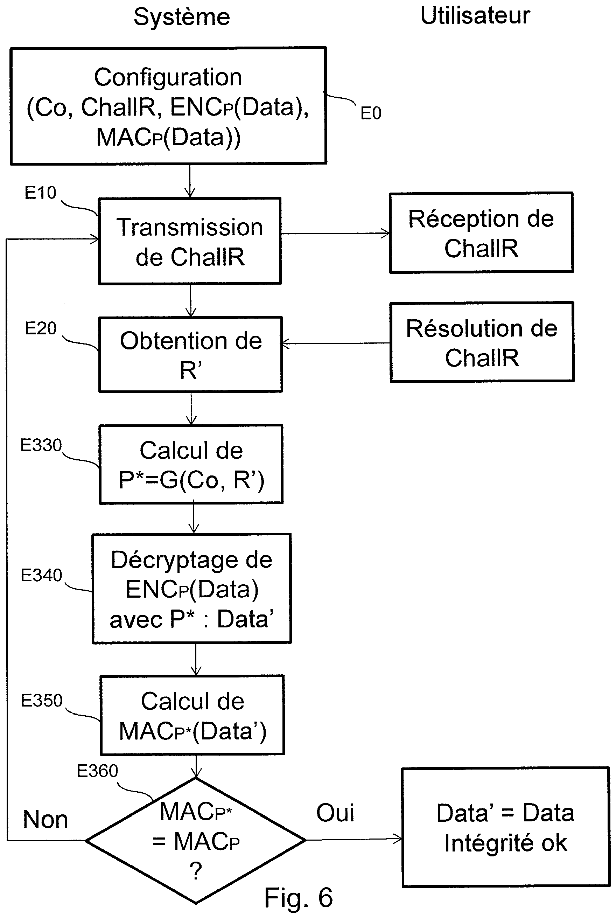

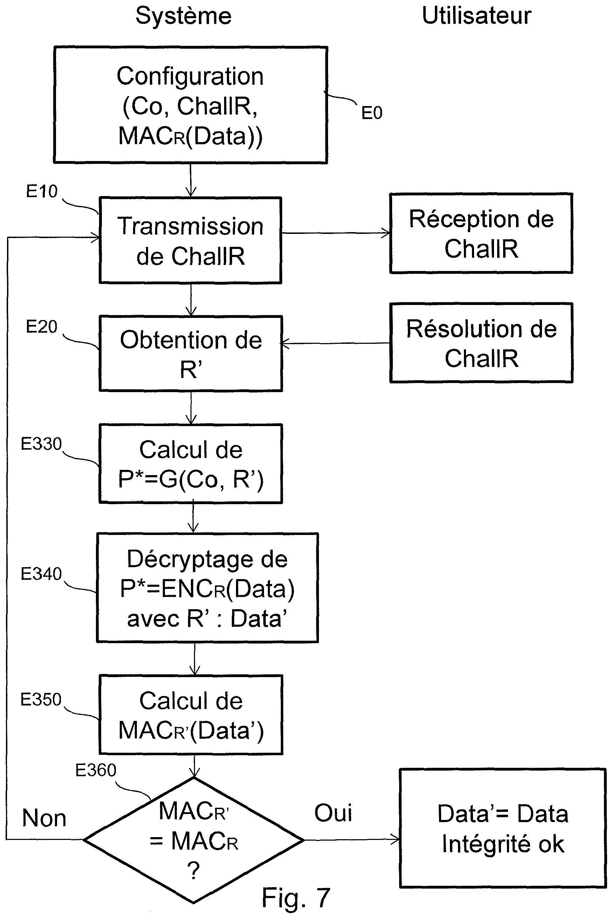

En variante, ce traitement peut consister à décrypter des informations sensibles encryptées avec la donnée sensible P et mémorisées dans le système, ou encore à décrypter des informations sensibles encryptées avec la réponse-CAPTCHA R au défi-CAPTCHA tel qu'il sera décrit ultérieurement en référence à la **figure 6** ou **7**.

Lorsque le système comprend plusieurs équipements, ce traitement peut être réalisé entièrement par l'unité de traitement CPU d'un même équipement ou bien en partie par cette unité de traitement et en partie par l'unité de traitement d'un autre équipement du système.

La **figure 4** représente un organigramme illustrant les principales étapes d'un procédé de traitement cryptographique selon un premier mode de réalisation de l'invention.

Ce procédé peut être mis en oeuvre par chacun des systèmes décrits en référence à la **figure 1** et s'apparente à un procédé d'authentification d'un utilisateur à l'aide d'un mot de passe.

L'authentification permet par exemple à l'utilisateur d'accéder à un service proposé par le système.

Pour simplifier, dans cet exemple le système est composé d'un seul équipement, à savoir une tablette tactile et le service est accessible via une application de cette tablette, préalablement configurée lors d'une étape E0 telle que décrite en référence à la **figure 3**.

Un ensemble (ChallR, Co) est donc mémorisé dans une mémoire non volatile de la tablette tactile à l'issue de cette étape de configuration E0, ni P ni R n'étant directement mémorisé dans ce même équipement.

Dans ce mode de réalisation, l'utilisateur lance une application résidant sur sa tablette afin de s'authentifier pour accéder à un service particulier, protégé par un mot de passe. L'utilisateur saisit alors un mot de passe P' sur le clavier virtuel de la tablette.

En réaction à l'obtention du mot de passe P' à l'étape E5, la tablette transmet au cours de l'étape E10, le défi-CAPTCHA ChallR mémorisé à l'utilisateur.

Ce défi-CAPTCHA consiste par exemple en une image affichée sur l'écran de la tablette.

L'utilisateur doit reconnaître la séquence de lettres et de chiffres contenue dans l'image et la retranscrire par l'intermédiaire du clavier virtuel. La réponse R' de l'utilisateur au défi-CAPTCHA ChallR est obtenue par la tablette au cours de l'étape E20.

En variante, au lancement de l'application, la tablette peut directement, c'est-à-dire préalablement à l'étape E5, transmettre (étape E10) à l'utilisateur un défi-CAPTCHA ChallR, dont un exemple particulier est représenté sur la **figure 5**.

Par exemple, l'utilisateur saisit alors, de façon dissociée (par exemple dans deux champs de saisie distincts) son mot de passe P' et une réponse CAPTCH1 R' au défi soumis.

Dans un autre exemple, le défi-CAPTCHA est conçu de sorte que la réponse R' saisie par l'utilisateur comprenne indirectement son mot de passe P' : R' = v(P') où v est une fonction prédéterminée, calculée à partir de R à l'étape E0.

Dans l'exemple de la **figure 5**, la fonction v est un tableau de correspondance, calculé lors de l'étape de configuration E0 en fonction de la réponse-CAPTCHA R et de la donnée sensible P, de sorte que v vérifie notamment l'égalité R=v(P). Ainsi l'utilisateur ne saisit pas directement son mot de passe P' mais les chiffres correspondants selon ce tableau v.

Par exemple, pour résoudre le défi-CAPTCHA de la **figure 5**, si le mot de passe de l'utilisateur est P' = 0246, il devra saisir la réponse R' = 5264.

Cette variante permet d'économiser les échanges avec l'utilisateur et de procéder plus rapidement à l'authentification de l'utilisateur.

De retour à l'exemple de la **figure 4**, le traitement cryptographique comprend ensuite dans ce premier mode de réalisation une étape de calcul E310 de la valeur C' = F(P', R') de la fonction cryptographique F en fonction du mot de passe P' saisi par l'utilisateur et de la réponse R' de l'utilisateur au défi-CAPTCHA ChallR.

A noter que dans le cas du défi-CAPTCHA de la **figure 5**, le mot de passe P' de l'utilisateur est obtenu en appliquant la fonction réciproque de v à la réponse R' de l'utilisateur obtenue à l'étape E20 : $P' = v^{-1}(R')$. Ainsi dans cet exemple, la valeur C' se calcule comme suit : $C' = F(v^{-1}(R'), R')$.

Le traitement cryptographique comprend en outre une étape de comparaison E320 de la valeur calculée C' avec la valeur de référence Co mémorisée lors de l'étape préalable de configuration E0.

Lorsque ces deux valeurs sont égales, la tablette authentifie l'utilisateur et lui permet d'accéder au service souhaité.

Sinon, l'utilisateur n'est pas authentifié et ne peut accéder au service.

Dans l'exemple représenté, lorsque l'étape de comparaison E320 n'aboutit pas à l'authentification de l'utilisateur, le procédé est répété après une nouvelle étape de configuration E0 telle que décrite en référence à la **figure 3**.

Bien entendu, l'étape de configuration E0 est optionnelle lors d'une nouvelle itération du procédé. Ainsi un même défi-CAPTCHA pourrait être utilisé dans plusieurs itérations du procédé.

Notamment, une nouvelle valeur $R_2$ est générée à cette occasion.

Dans un mode de réalisation, la nouvelle étape de configuration (i.e. celle préalable à l'itération suivante) peut être simplifiée en calculant la nouvelle valeur de référence $Co_2$ de manière incrémentale, par rapport la valeur de référence Co utilisée à l'itération précédente : $Co_2 = u(Co, R_2)$ où u est une fonction donnée.

Ainsi, le calcul de la nouvelle valeur de référence $Co_2$ ne nécessite pas d'accès à la donnée sensible P comme c'est le cas pour le calcul de la valeur de référence Co. Dans ce mode de réalisation, l'accès à la donnée sensible P est donc limité à l'étape de configuration de l'itération initiale.

A l'issue de cette nouvelle étape de configuration, un nouveau couple $(ChallR_2, Co_2)$ est disponible dans la mémoire non volatile de la tablette tactile, les valeurs $R_2$ et P n'étant pas gardées en mémoire du système.

Cette nouvelle étape de configuration permet de proposer un nouveau défi-CAPTCHA $ChallR_2$ à l'utilisateur et d'effectuer de même que précédemment les différentes étapes d'obtention E5 d'un mot de passe P' saisi par l'utilisateur, de transmission E10 du nouveau défi-CAPTCHA $ChallR_2$, d'obtention E20 d'une réponse $R'_2$ de l'utilisateur au défi-CAPTCHA $ChallR_2$, de calcul E310 d'une nouvelle valeur $C'_2 = F(P', R'_2)$ jusqu'à l'étape de comparaison E320 au cours de laquelle la nouvelle valeur calculée $C'_2$ est comparée à la nouvelle valeur de référence $Co_2$ mémorisée lors de la nouvelle étape de configuration E0.

L'utilisateur peut donc tenter de s'authentifier à nouveau mais doit résoudre un nouveau défi-CAPTCHA.

La **figure 6** représente un organigramme illustrant les principales étapes d'un procédé de traitement cryptographique selon un deuxième mode de réalisation de l'invention.

Ce procédé peut être mis en oeuvre par chacun des systèmes décrits en référence à la **figure 1** et s'apparente à un procédé de sécurisation de l'accès à des informations sensibles référencées Data, encryptées.

Dans l'exemple de la **figure 6**, ces informations sensibles sont encryptées avec la donnée sensible précitée P servant alors comme clé de cryptage K, K=P : $ENC_K(Data)$.

Par exemple, la fonction de cryptage ENC peut être toute fonction cryptographique à clé symétrique, mais non exclusivement.

En particulier, dans cet exemple le système comprend un terminal de téléphonie mobile communiquant avec un serveur via un réseau de télécommunications NTW tel que décrit en référence à la **figure 1**. Le terminal a été préalablement configuré lors d'une étape E0 au terme de laquelle l'ensemble (Co, ChallR, $ENC_K(Data)$) est mémorisé dans la mémoire non volatile par exemple du terminal.

Pour rappel, Co=F(P,R), par exemple Co=EN-$CRYPT_R(P)$ pour une fonction F de cryptage symétrique et Co=$ENCRYPT_{f1(R)}(P)$ pour une fonction F de cryptage asymétrique.

De manière générale, une fonction de cryptage F dotée d'une fonction réciproque G vérifie les égalités suivantes en ce qui concerne les valeurs Co et P :

$$Co = F(P,R) = ENC_{f1(R)}(P)$$

$$P = G(C,R) = DEC_{f2(R)}(Co)$$

où $f_1$ est la clé de chiffrement de la fonction cryptographique F et $f_2$ est la clé de chiffrement de la fonction réciproque G. Ces clés dépendent toutes deux de la solution R au défi-CAPTCHA.

Tel que décrit ci-avant, F peut être une fonction de chiffrement symétrique, auquel cas il y a égalité entre ces clés : $f_1(R) = f_2(R)$. Par exemple, $f_1(R) = f_2(R) = R$.

En variante, la fonction F peut être une fonction de cryptage asymétrique et les clés $f_1(R)$ et $f_2(R)$ peuvent être un couple clé publique/clé privée.

De façon optionnelle et tel que représenté sur la **figure 6**, un code d'authentification de message référencé $MAC_K(Data)$ (pour *Message Authentification Code* en terminologie anglo-saxonne) peut être mémorisé au cours de cette étape de configuration E0.

Ce code d'authentification de message fonction de la donnée sensible P comme clé (K=P) et des informations sensibles Data permet d'ajouter un degré supplémentaire de sécurité au procédé vis-à-vis d'un système automatique attaquant en vérifiant l'intégrité des informations sensibles décryptées lors de la mise en oeuvre du procédé.

Co et ChallR sont obtenus de façon similaire à ce qui a été décrit précédemment en lien avec la **figure 3**.

De façon similaire, $ENC_K(Data)$ et $MAC_K(Data)$ peuvent être obtenus d'une entité tierce, ou en variante calculés par l'unité de traitement CPU du terminal, puis mémorisés dans sa mémoire non volatile.

A l'issue de l'étape de configuration E0, ChallR, $ENC_K(Data)$ et $MAC_K(Data)$ sont stockés dans le système mais P et R ne le sont pas.

De retour à notre exemple, les étapes E10 et E20 sont identiques à celles décrites en référence à la **figure 3** et aboutissent à l'obtention d'une réponse R' d'un utilisateur à un défi-CAPTCHA ChallR.

L'étape de traitement, précédemment introduite de manière générale en référence à la **figure 3**, comprend dans ce second mode une étape E330 de calcul d'une valeur P* obtenue par application de la fonction réciproque G de la fonction cryptographique F à une paire de valeurs Co et R', où Co est la valeur de référence Co mémorisée lors de la configuration et R' est la réponse saisie obtenue : $P^* = G(Co, R')$ où $G=F^{-1}$ est la fonction réciproque de la fonction cryptographique précédemment utilisée pour calculer Co.

Dans le cas où F est une fonction de cryptage symétrique, la réciproque G est la fonction de décryptage réciproque à F, utilisant la même clé de cryptage symétrique R, à savoir $P^* = G(Co, R') = DECRYPT_{R'}(Co)$.

Dans le cas où F est une fonction de cryptage asymétrique, la réciproque G est la fonction de décryptage réciproque à F, utilisant l'autre clé asymétrique $f_2(R)$, à savoir $P^* = G(Co, R') = DECRYPT_{fz(R)}(Co)$.

Dans un mode de réalisation mettant en oeuvre une fonction de cryptage asymétrique, notons (PK,SK) le couple de clés asymétriques, PK étant la clé publique et SK la clé privée. Dans cet exemple particulier de mise en oeuvre, $f_1$ est choisie telle que $f_1(R)=PK$ pour toutes les valeurs possibles de R, et $f_2$ est choisie telle que $f_2(R)=SK$ lorsque R est la valeur attendue. Un exemple pour $f_2$ est le suivant : $f_2(R)=DEC_R(ENC_R(SK))$ où ENC/DEC est un couple de fonctions réciproque d'encryptage symétrique par exemple. Cet exemple nécessite uniquement que le système de traitement cryptographique stocke, en mémoire, la valeur $ENC_R(SK)$, qui pourra donc être fournie à l'étape E0 de configuration.

Puis, dans l'exemple de la **figure 6**, le traitement cryptographique comprend également une étape de décryptage E340 des informations sensibles encryptées $ENC_K(Data)$, à l'aide de la clé de cryptage calculée K'=P*. Des techniques classiques de décryptage par clé (notamment symétrique) peuvent être mises en oeuvre. On obtient alors les informations Data'=$DEC_K(ENC_K(Data))$.

De façon optionnelle et tel que représenté sur la **figure 6**, lorsque le code $MAC_K(Data)$ a été mémorisé lors de l'étape de configuration E0, l'étape de traitement peut également comprendre :

- le calcul (étape E350) d'un code d'authentification de message $MAC_{K'}(Data')$ fonction de la clé de cryptage calculée K'=P* à l'étape E330 et des informations sensibles Data' décryptées à l'étape E340 à l'aide de cette clé de cryptage K'=P*, et
- une étape de comparaison E360 du code calculé $MAC_{K'}(Data')$ avec le code mémorisé $MAC_K(Data)$ lors de l'étape préalable de configuration E0.

Lorsque ces deux codes sont égaux, le système considère que les informations sensibles décryptées Data' sont intègres. L'utilisateur peut alors y accéder via son terminal.

En cas de décryptage erroné ou de code d'authentification de message erroné, le système exécute une nouvelle fois le procédé tel que représenté sur la **figure 6**, à commencer par la retransmission du défi-CAPTCHA précédent.

En variante, et tel que décrit en référence à la figure 5, le défi-CAPTCHA peut être renouvelé lors d'une nouvelle étape de configuration E0, à l'aide d'une nouvelle valeur $R_2$.

En variante de l'exemple décrit ici, l'étape préliminaire de configuration E0 peut comprendre la mémorisation de données Data au lieu de $ENC_K(Data)$ et la clef clé de cryptage K'=P* calculée à l'étape E330 peut servir à crypter ces données Data : $ENC_{K'}(Data)$, afin qu'elles ne soient pas exploitées par un attaquant qui surveillerait le réseau lors de leur transmission à un destinataire. L'étape E360 est alors remplacée par la transmission des données cryptées sur le réseau.

Dans cette variante, l'étape de configuration E0 peut prévoir la mémorisation de $MAC_K(ENC_K(Data))$ de sorte que l'étape optionnelle E350 puisse être utilisée pour vérifier que la clé utilisée K' est celle attendue, en calculant ainsi un code d'authentification de message sur les données cryptés : $MAC_{K'}(ENC_{K'}(Data))$, et en comparant ce code avec $MAC_K(ENC_K(Data))$ en mémoire.

Dans une autre variante, la clé K utilisée peut être obtenue comme une valeur de hachage d'une concaténation entre la donnée sensible P et la valeur quelconque R : K=hash(P|R) où '|'est l'opérateur de concaténation. Dans cette variante, la vérification d'intégrité est menée sur la valeur R définissant le CAPTCHA et non plus sur les données Data, afin de diminuer la complexité de traitement.

A l'étape de configuration E0, ce sont les valeurs $ENC_K(Data)$ et $MAC_K(R)$ qui sont alors mémorisées à l'aide de cette clé, dans une mémoire non volatile.

L'étape E340 de décryptage comprend le calcul de la clé K' de décryptage à l'aide de R' obtenue à l'étape E20 et de P* obtenue à l'étape E330 : K'=hash(P*|R'). Cette clé K' est alors utilisée lors du décryptage de l'étape E340: Data'=$DEC_{K'}(ENC_K(Data))$.

Puis l'étape E350 consiste en le calcul du code d'authentification de message, à l'aide de cette clé K', sur la valeur R' obtenue à l'étape E20 : $MAC_{K'}(R')$.

L'étape E360 compare alors $MAC_{K'}(R')$ avec $MAC_K(R)$ en mémoire pour détecter une éventuelle erreur.

Dans encore une autre variante de la **figure 6**, la clé pour le cryptage/décryptage est $K_1$=P ($K'_1$=P* lors de l'étape E340) alors qu'une clé $K_2$ différente est utilisée pour le code d'authentification de message, par exemple $K_2$ est la valeur de hachage évoquée ci-dessus $K_2$=hash(P|R) ($K'_2$=hash(P*|R') lors de l'étape E350).

Dans une autre variante, un code $MAC_K(Data^*)$ est calculé avec une donnée Data* avantageusement de taille inférieure à la donnée Data à crypter/décrypter. Cette donnée Data* est différente de la réponse au défi-CAPTCHA R. Le code $MAC_K(Data^*)$ est ensuite mémorisé au niveau de l'étape de configuration E0.

Cette donnée Data*, connue de l'utilisateur, par exemple une donnée personnelle, est demandée à celui-ci en cours de procédé. Un code $MAC_{K'}(Data^*)$, où K' est une clef obtenue tel que décrit précédemment, est calculé à partir de la donnée personnelle obtenue de l'utilisateur puis est ensuite comparé au code $MAC_K(Data^*)$ en mémoire.

Ainsi, cette donnée Data* permet d'effectuer un contrôle supplémentaire mobilisant toutefois des ressources de façon limitée, puisque l'objet du contrôle présente une taille sensiblement moins importante que les données Data à crypter/décrypter.

La **figure 7** représente un organigramme illustrant les principales étapes d'une variante du procédé de traitement cryptographique décrit en référence à la **figure 6**.

Dans cette variante, les informations sensibles Data ne sont pas encryptées avec la donnée sensible P, mais la donnée sensible P représente elle-même les informations sensibles encryptées à l'aide de la valeur R (réponse-CAPTCHA au défi-CAPTCHA) utilisée comme clé de cryptage K=R : $P = ENC_K(Data)$.

L'encryptage de ces informations peut être réalisé par le système ou bien la donnée sensible P peut être directement obtenue d'une entité tierce, tel que décrit en référence à la **figure 3**.

Le calcul de $Co = ENCRYPT_K(P) = ENCRYPT_K(ENC_K(Data))$ avec K=R est effectué de même que précédemment décrit, à partir de la donnée sensible $P = ENC_K(Data)$ et de la valeur R. Quant au code d'authentification de message, lorsqu'il est mis en oeuvre, celui-ci est calculé à partir de la valeur R (et non P comme dans le mode de réalisation précédent) servant de clef de cryptage K aux informations sensibles Data : $MAC_K(Data)$ avec K=R.

Aussi, au terme de cette étape de configuration E0, l'ensemble en mémoire du terminal est le suivant : $(Co, ChalR, MAC_K(Data))$, P et R n'étant pas en mémoire du terminal.

A noter que dans le cas de l'utilisation d'une fonction de cryptage asymétrique F telle qu'évoquée précédemment, la clé $f_1(R)$ est utilisée de sorte que $Co = ENCRYPT_{f1(R)}(P) = ENCRYPT_{f1(R)}(ENC_K(Data))$, où K=R.

Les étapes E10, E20, E330 sont identiques à celles décrites en référence à la **figure 6**. A l'issue de l'étape E330 on obtient donc les informations sensibles encryptées : $P^*=G(Co, R')= ENC_K(Data)$ et l'étape de décryptage E340 diffère de celle de la **figure 6** en ce que les informations sensibles encryptées $P^* = ENC_K(Data)$ sont décryptées à l'aide de la réponse R' de l'utilisateur obtenue à l'étape E20 et utilisée comme clé de décryptage K'=R'. On obtient alors des informations $Data'=DEC_{K'}(P^*)=DEC_{K'}(ENC_K(Data))$.

Bien entendu, la fonction d'encryptage des données peut être choisie asymétrique (par exemple identique à ENCRYPT), K et K' pouvant alors prendre respectivement les valeurs $f_1(R)$ et $f_2(R')$.

Les étapes E350 et E360 diffèrent de celles précédemment décrites en ceci que le code calculé $MAC_{K'}(Data')$ est fonction de la réponse R' de l'utilisateur utilisée comme clé K', les codes comparés étant de même que précédemment : le code $MAC_{K'}(Data')$ calculé et le code $MAC_K(Data)$ mémorisé au cours de l'étape préalable de configuration.

Les exemples qui précèdent ne sont que des modes de réalisation de l'invention qui ne s'y limite pas.

## Revendications

1. Procédé de traitement cryptographique utilisant une donnée sensible (P) dans un système de traitement cryptographique comprenant en mémoire un test permettant de différencier un humain d'un ordinateur (ChalR) ainsi qu'une valeur de référence (Co) obtenue en appliquant une fonction cryptographique (F) à une paire de valeurs P et R, où P est ladite donnée sensible et R est une solution au test mémorisé (ChalR), ledit procédé comprenant :

   - une étape de configuration (E0) du système de traitement cryptographique, comprenant l'obtention et la mémorisation de ladite valeur de référence (Co) dans ledit système cryptographique, puis
   - une étape de transmission (E10) du test mémorisé (ChalR) à un utilisateur,
   - une étape d'obtention (E20) d'une réponse (R') de l'utilisateur audit test transmis,
   - une étape de traitement cryptographique (E30) basé sur la donnée sensible (P), utilisant ladite réponse obtenue (R'), ladite valeur de référence (Co) ainsi que ladite fonction cryptographique (F),

   ledit procédé étant **caractérisé en ce que** :

   - l'étape de configuration (E0) est préalable à l'étape de transmission (E10),
   - ladite valeur de référence (Co) et ledit test (ChalR) sont en mémoire dudit système de traitement cryptographique lors de ladite étape de transmission (E10) ; et
   - lorsque ladite solution (R) est en mémoire dudit système de traitement cryptographique pendant l'étape de configuration (E0), elle est supprimée à l'issue de cette étape de configuration, de sorte que ladite solution (R) n'est pas en mémoire dudit système de traitement cryptographique lors de ladite étape de transmission (E10).

2. Procédé de traitement selon la revendication 1, **caractérisé en ce que** ledit test est un défi-CAPTCHA (ChalR) dont la solution est une réponse-CAPTCHA (R).

3. Procédé de traitement selon l'une quelconque des revendications 1 à 2, **caractérisé en ce qu'**il comprend en outre une étape d'obtention (E5) d'une donnée (P') saisie par l'utilisateur, et **en ce que** ladite étape de traitement cryptographique (E30) comprend :

- une étape de calcul (E310) d'une valeur (C) obtenue en appliquant ladite fonction cryptographique (F) à une paire de valeurs P' et R', où P' est ladite donnée saisie et R' est ladite réponse obtenue, et
- une étape de comparaison (E320) de ladite valeur calculée (C) avec ladite valeur de référence (Co), de sorte à vérifier que la donnée saisie (P') égale la donnée sensible (P).

4. Procédé de traitement selon la revendication 3, **caractérisé en ce que** ladite fonction cryptographique (F) est une fonction à sens unique.

5. Procédé de traitement selon l'une quelconque des revendications 1 à 2, **caractérisé en ce que** ladite fonction cryptographique (F) est une fonction de chiffrement et ladite étape de traitement (E30) comprend :

- une étape de calcul (E330) d'une valeur (P*) obtenue en appliquant une fonction réciproque (G) de ladite fonction cryptographique (F) à une paire de valeurs Co et R', où Co est ladite valeur de référence et R' est ladite réponse saisie obtenue, et
- une étape de cryptage ou de décryptage (E340) d'une information sensible (ENC$_P$(Data), ENC$_R$(Data)) utilisant la valeur calculée (P*) de la fonction réciproque (G).

6. Procédé de traitement selon la revendication 5, **caractérisé en ce que** ladite valeur calculée (P*) de la fonction réciproque est une clé de cryptage utilisée lors de l'étape de décryptage pour décrypter l'information sensible encryptée (ENC$_P$(Data)) stockée en mémoire dudit système de traitement cryptographique.

7. Procédé de traitement selon la revendication 5, **caractérisé en ce que** ladite information sensible encryptée (ENC$_R$(Data)) à décrypter est ladite valeur calculée (P*) de la fonction réciproque, l'étape de décryptage de ladite valeur calculée (P*) de la fonction réciproque comprend l'utilisation d'une clé de cryptage basée sur ladite réponse obtenue (R') de l'utilisateur.

8. Procédé de traitement selon l'une quelconque des revendications 5 à 7, **caractérisé en ce que** la fonction cryptographique (F) et sa réciproque (G) sont des fonctions de chiffrement asymétrique dont la paire de clés de chiffrement asymétrique est basée sur ladite solution (R) au test mémorisé (ChalIR).

9. Procédé de traitement selon l'une quelconque des revendications 5 à 8, **caractérisé en ce que** ledit système de traitement cryptographique comprend en outre en mémoire un code d'authentification de message (MAC$_P$(Data) ; MAC$_R$(Data)) appliqué à ladite information sensible (Data) et ayant pour clef secrète ladite donnée sensible (P) ou ladite solution (R), et **en ce que** ladite étape de traitement (E30) cryptographique comprend en outre :

- une étape de calcul (E350) d'un code d'authentification de message (MAC$_{P*}$(Data') ; MAC$_{R'}$(Data')) appliqué à ladite information sensible décryptée et ayant pour clef secrète ladite clé de cryptage calculée (P*) ou obtenue (R') par ledit système de traitement cryptographique, et
- une étape de vérification de l'intégrité (E360) de l'information sensible décryptée par comparaison dudit code d'authentification mémorisé (MAC$_P$(Data) ; MAC$_R$(Data)) avec ledit code d'authentification calculé (MAP$_{P*}$(Data') ; MAC$_{R'}$(Data')).

10. Procédé de traitement selon l'une quelconque des revendications 1 à 9, **caractérisé en ce qu'**il comprend en outre une nouvelle itération des étapes de transmission (E10), d'obtention (E20) d'une deuxième réponse (R'2) et de traitement cryptographique (E30), à l'aide d'un deuxième test permettant de différencier un humain d'un ordinateur (ChalIR2) ayant une deuxième solution (R2) et d'une deuxième valeur de référence (Co2) obtenue en appliquant la fonction cryptographique (F) à une paire de valeurs P et R2, où P est ladite donnée sensible et R2 est ladite deuxième solution, ladite deuxième valeur de référence (Co2) et ledit deuxième test (ChalIR2) étant en mémoire dudit système de traitement cryptographique et ladite deuxième solution (R2) n'étant pas en mémoire dudit système de traitement cryptographique lors de ladite étape de transmission (E10) de cette nouvelle itération.

11. Procédé de traitement selon la revendication 10, **caractérisé en ce que** ladite deuxième valeur de référence (Co2) est calculée à partir de ladite valeur de référence (Co) du test précédent et de ladite deuxième solution (R2), sans manipuler ladite donnée sensible (P).

12. Programme d'ordinateur comprenant des instructions pour la mise en oeuvre d'un procédé de traitement cryptographique selon l'une quelconque des revendications 1 à 11, lorsqu'il est chargé et exécuté par un processeur.

13. Support lisible par un processeur, comprenant les instructions d'un programme d'ordinateur pour mettre en oeuvre un procédé de traitement cryptographique selon l'une quelconque des revendications 1 à 11.

14. Système de traitement cryptographique comprenant :

- au moins une mémoire (ROM) comprenant un test permettant de différencier un humain d'un ordinateur (ChaIIR) ainsi que la valeur de référence (Co) obtenue en appliquant une fonction cryptographique (F) à une paire de valeurs P et R, où P est une donnée sensible et R est une solution liée au test (ChaIIR),
- des moyens de configuration (E0) du système de traitement cryptographique, comprenant des moyens d'obtention et de mémorisation de ladite valeur de référence (Co) dans ledit système cryptographique, préalablement à la transmission dudit test mémorisé à un utilisateur,
- des moyens de transmission (I/O) dudit test mémorisé (ChaIIR) à un utilisateur,
- des moyens d'obtention (I/O) d'une réponse (R') de l'utilisateur audit test transmis,
- des moyens de traitement (CPU) configurés pour réaliser un traitement cryptographique basé sur la donnée sensible (P) en utilisant ladite réponse obtenue (R'), ladite valeur de référence (Co) ainsi que ladite fonction cryptographique (F),

ledit système étant **caractérisé en ce qu'**il comprend en mémoire ladite valeur de référence (Co) et ledit test (ChaIIR) lorsque les moyens de transmission (I/O) sont mis en oeuvre, et **en ce que** les moyens de configuration sont configurés pour supprimer ladite solution (R) à l'issue de leur mise en oeuvre lorsque le système comprend en mémoire ladite solution (R) alors que les moyens de configuration sont mis en oeuvre, de sorte que le système ne comprend pas ladite solution (R) en mémoire lorsque les moyens de transmission (I/O) sont mis en oeuvre.

15. Système de traitement selon la revendication 14, **caractérisé en ce qu'**il comprend en outre des moyens d'obtention (I/O) d'une donnée (P') saisie par l'utilisateur, et **en ce que** lesdits moyens de traitement cryptographique comprennent :

- des moyens de calcul (CPU) d'une valeur (C) obtenue en appliquant ladite fonction cryptographique (F) à une paire de valeurs P' et R', où P' est ladite donnée saisie et R' est ladite réponse obtenue, et
- des moyens de comparaison (CPU) de ladite valeur calculée (C) avec ladite valeur de référence (Co), de sorte à vérifier que la donnée saisie (P') égale la donnée sensible (P).

16. Système de traitement selon la revendication 14, **caractérisé en ce que** ladite fonction cryptographique (F) est une fonction de chiffrement et lesdits moyens de traitement comprennent :

- des moyens de calcul (CPU) d'une valeur (P*) obtenue en appliquant la fonction réciproque (G) de ladite fonction cryptographique (F) à une paire de valeurs Co et R', où Co est ladite valeur de référence et R' est ladite réponse obtenue, et
- des moyens de décryptage (CPU) d'une information sensible encryptée ($ENC_P$(Data), $ENC_R$(Data)) à l'aide d'une clef de cryptage calculée (P*) ou obtenue (R') par ledit système de traitement cryptographique.

## Patentansprüche

1. Verfahren für kryptographische Verarbeitung, die sensible Daten (P) verwendet, in einem System für kryptographische Verarbeitung, das in einem Speicher einen Test (ChallR), der ermöglicht, zwischen einem Menschen und einem Computer zu unterscheiden, sowie einen Referenzwert (Co), der durch Anwenden einer kryptographischen Funktion (F) auf ein Paar von Werten P und R erhalten wird, enthält, wobei P die sensiblen Daten bezeichnet und R eine Lösung für den gespeicherten Test (ChallR) ist, wobei das Verfahren Folgendes umfasst:

- einen Schritt (E0) des Konfigurierens des Systems für kryptographische Verarbeitung, der das Erhalten und das Speichern des Referenzwertes (Co) in dem kryptographischen System umfasst, dann
- einen Schritt (E10) des Sendens des gespeicherten Tests (ChallR) an einen Anwender,
- einen Schritt (E20) des Erhaltens einer Antwort (R') von dem Anwender auf den gesendeten Test,
- einen Schritt (E30) des kryptographischen Verarbeitens auf der Grundlage der sensiblen Daten (P) unter Verwendung der erhaltenen Antwort (R'), des Referenzwerts (Co) sowie der kryptographischen Funktion (F),

wobei das Verfahren **dadurch gekennzeichnet ist, dass**:

- der Konfigurationsschritt (E0) dem Sendeschritt (E10) vorhergeht,
- der Referenzwert (Co) und der Test (ChallR) sich während des Sendeschrittes (E10) im Speicher des Systems für kryptographische Verarbeitung befinden; und

- dann, wenn sich die Lösung (R) während des Konfigurationsschrittes (E0) im Speicher des Systems für kryptographische Verarbeitung befindet, sie am Ende dieses Konfigurationsschrittes unterdrückt wird, derart, dass sich die Lösung (R) während des Sendeschrittes (E10) nicht im Speicher des Systems für kryptographische Verarbeitung befindet.

2. Verarbeitungsverfahren nach Anspruch 1, **dadurch gekennzeichnet, dass** der Test (ChallR) eine CAPTCHA-Herausforderung ist, dessen Lösung (R) eine CAPTCHA-Antwort ist.

3. Verarbeitungsverfahren nach einem der Ansprüche 1 bis 2, **dadurch gekennzeichnet, dass** es außerdem einen Schritt (E5) des Erhaltens von Daten (P'), die von einem Anwender erfasst werden, umfasst und dass der Schritt (E30) des kryptographischen Verarbeitens Folgendes umfasst:

- einen Schritt (E310) des Berechnens eines Wertes (C), der durch Anwenden der kryptographischen Funktion (F) auf ein Paar von Werten P' und R' erhalten wird, wobei P' die erfassten Daten bezeichnet und R' die erhaltene Antwort ist, und
- einen Schritt (E320) des Vergleichens des berechneten Wertes (C) mit dem Referenzwert (Co), derart, dass verifiziert wird, dass die erfassten Daten (P') gleich den sensiblen Daten (P) sind.

4. Verarbeitungsverfahren nach Anspruch 3, **dadurch gekennzeichnet, dass** die kryptographische Funktion (F) eine Funktion mit eindeutigem Richtungssinn ist.

5. Verarbeitungsverfahren nach einem der Ansprüche 1 bis 2, **dadurch gekennzeichnet, dass** die kryptographische Funktion (F) eine Chiffrierfunktion ist und der Verarbeitungsschritt (E30) Folgendes umfasst:

- einen Schritt (E330) des Berechnens eines Wertes (P*), der durch Anwenden einer reziproken Funktion (G) der kryptographischen Funktion (F) auf ein Paar von Werten Co und R' erhalten wird, wobei Co der Referenzwert ist und R' die erhaltene erfasste Antwort ist, und
- einen Schritt (E340) des Verschlüsselns oder Entschlüsselns sensibler Informationen (ENC$_P$(Data), ENC$_R$(Data)) unter Verwendung des berechneten Wertes (P*) der reziproken Funktion (G).

6. Verarbeitungsverfahren nach Anspruch 5, **dadurch gekennzeichnet, dass** der berechnete Wert (P*) der reziproken Funktion ein Verschlüsselungsschlüssel ist, der im Schritt des Entschlüsselns verwendet wird, um verschlüsselte sensible Informationen (ENC$_P$(Data)), die im Speicher des Systems für kryptographische Verarbeitung gespeichert sind, zu entschlüsseln.

7. Verarbeitungsverfahren nach Anspruch 5, **dadurch gekennzeichnet, dass** die verschlüsselten sensiblen Informationen (ENC$_R$(Data)), die entschlüsselt werden sollen, den berechneten Wert (P*) der reziproken Funktion bezeichnen, wobei der Schritt des Entschlüsselns des berechneten Wertes (P*) der reziproken Funktion das Verwenden eines Verschlüsselungsschlüssels, der auf der erhaltenen Antwort (R') des Anwenders beruht, umfasst.

8. Verarbeitungsverfahren nach einem der Ansprüche 5 bis 7, **dadurch gekennzeichnet, dass** die kryptographische Funktion (F) und ihre reziproke Funktion (G) asymmetrische Chiffrierfunktionen sind, deren asymmetrisches Paar von Chiffrierschlüsseln auf der Lösung (R) für den gespeicherten Test (ChallR) beruht.

9. Verarbeitungsverfahren nach einem der Ansprüche 5 bis 8, **dadurch gekennzeichnet, dass** das System für kryptographische Verarbeitung außerdem im Speicher einen Nachrichtenauthentifizierungscode (MAC$_P$(Data); MAC$_R$(Data)) enthält, der auf die sensiblen Informationen (Data) angewendet wird und als geheimen Schlüssel die sensiblen Daten (P) oder die Lösung (R) besitzt, und dass der Schritt (E30) des kryptographischen Verarbeitens außerdem Folgendes umfasst:

- einen Schritt (E350) des Berechnens eines Nachrichtenauthentifizierungscodes (MAC$_{P*}$(Data'); MAC$_R$'(Data')), der auf die entschlüsselten sensiblen Informationen angewendet wird und der als geheimen Schlüssel den durch das System für kryptographische Verarbeitung berechneten (P*) oder erhaltenen (R') Verschlüsselungsschlüssel besitzt, und
- einen Schritt (E360) des Verifizierens der Integrität der entschlüsselten sensiblen Informationen durch Vergleichen des gespeicherten Authentifizierungscodes (MAC$_P$(Data); MAC$_R$(Data)) mit dem berechneten Authentifizierungscode (MAC$_{P*}$(Data'); MAC$_R$'(Data')).

10. Verarbeitungsverfahren nach einem der Ansprüche 1 bis 9, **dadurch gekennzeichnet, dass** es außerdem eine neue Iteration der Schritte des Sendens (E10), des Erhaltens (E20) einer zweiten Antwort (R'2) und des kryptographischen Verarbeitens (E30) mit Hilfe eines zweiten Tests (ChallR2), der ermöglicht, einen Menschen von einem Computer zu unterscheiden und der eine zweite Lösung (R2) und einen zweiten Referenzwert (Co2) besitzt, der durch Anwenden der kryptographischen Funktion (F) auf ein Paar von Werten P und R2 erhalten wird, wobei P die sensiblen Daten bezeichnet und R2 die zweite Lösung ist, umfasst, wobei sich während des Schrittes (E10) des Sendens dieser neuen Iteration der zweite Referenzwert (Co2) und der zweite Test (ChallR2) im Speicher des Systems für kryptographische Verarbeitung befinden und sich die zweite Lösung (R2) nicht im Speicher des Systems für kryptographische Verarbeitung befindet.

11. Verarbeitungsverfahren nach Anspruch 10, **dadurch gekennzeichnet, dass** der zweite Referenzwert (Co2) anhand des Referenzwertes (Co) des vorhergehenden Tests und der zweiten Lösung (R2) berechnet wird, ohne die sensiblen Daten (P) zu manipulieren.

12. Computerprogramm, das Befehle für die Ausführung eines Verfahrens für kryptographische Verarbeitung nach einem der Ansprüche 1 bis 11, wenn es in einen Prozessor geladen und durch diesen ausgeführt wird, enthält.

13. Träger, der durch einen Prozessor gelesen werden kann und Befehle eines Computerprogramms für die Ausführung eines Verfahrens für kryptographische Verarbeitung nach einem der Ansprüche 1 bis 11 enthält.

14. System für kryptographische Verarbeitung, das Folgendes umfasst:

   - wenigstens einen Speicher (ROM), der einen Test (ChallR), der ermöglicht, einen Menschen von einem Computer zu unterscheiden, sowie einen Referenzwert (Co), der durch Anwenden einer kryptographischen Funktion (F) auf ein Paar von Werten P und R erhalten wird, enthält, wobei P sensible Daten bezeichnet und R eine mit dem Test (ChallR) in Verbindung stehende Lösung ist,
   - Mittel (E0) zum Konfigurieren des Systems für kryptographische Verarbeitung, die Mittel zum Erhalten und Speichern des Referenzwertes (Co) in dem kryptographischen System vor dem Senden des gespeicherten Tests zu einem Anwender enthalten,
   - Mittel (I/O) zum Senden des gespeicherten Tests (ChallR) an einen Anwender,
   - Mittel (I/O) zum Erhalten einer Antwort (R') von dem Anwender auf den gesendeten Test,
   - Verarbeitungsmittel (CPU), die konfiguriert sind, eine kryptographische Verarbeitung anhand der sensiblen Daten (P) unter Verwendung der erhaltenen Antwort (R'), des Referenzwertes (Co) sowie der kryptographischen Funktion (F) zu verwirklichen,

wobei das System **dadurch gekennzeichnet ist, dass** es im Speicher den Referenzwert (Co) und den Test (ChallR) enthält, wenn die Sendemittel (I/O) in Betrieb sind, und dass die Konfigurationsmittel konfiguriert sind, die Lösung (R) am Ende ihres Betriebs zu unterdrücken, wenn das System im Speicher die Lösung (R) enthält, während die Konfigurationsmittel betrieben werden, derart, dass das System die Lösung (R) nicht im Speicher enthält, wenn die Sendemittel (I/O) betrieben werden.

15. Verarbeitungssystem nach Anspruch 14, **dadurch gekennzeichnet, dass** es außerdem Mittel (I/O) zum Erhalten von Daten (P'), die von dem Anwender erfasst werden, umfasst und dass die Mittel für kryptographische Verarbeitung Folgendes umfassen:

   - Mittel (CPU) zum Berechnen eines Wertes (C), der durch Anwenden der kryptographischen Funktion (F) auf ein Paar von Werten P' und R' erhalten wird, wobei P' die erfassten Daten bezeichnet und R' die erhaltene Antwort ist, und
   - Mittel (CPU) zum Vergleichen des berechneten Wertes (C) mit dem Referenzwert (Co), derart, dass verifiziert wird, dass die erfassten Daten (P') gleich den sensiblen Daten (P) sind.

16. Verarbeitungssystem nach Anspruch 14, **dadurch gekennzeichnet, dass** die kryptographische Funktion (F) eine Chiffrierfunktion ist und die Verarbeitungsmittel Folgendes umfassen:

   - Mittel (CPU) zum Berechnen eines Wertes (P*), der durch Anwenden der reziproken Funktion (G) der kryptographischen Funktion (F) auf ein Paar von Werten Co und R' erhalten wird, wobei Co der Referenzwert ist und R' die erhaltene Antwort ist, und
   - Mittel (CPU) zum Entschlüsseln von verschlüsselten sensiblen Informationen ($ENC_P$(Data), $ENC_R$(Data)) mit Hilfe eines durch das System für kryptographische Verarbeitung berechneten (P*) oder erhaltenen (R') Verschlüsselungsschlüssels.

**Claims**

1. Method of cryptographic processing using a sensitive data item (P) in a cryptographic processing system comprising in memory a test making it possible to tell a human and a computer apart (ChallR) as well as a reference value (Co) obtained by applying a cryptographic function (F) to a pair of values P and R, where P is said sensitive data item and R is a solution to the memorized test (ChallR), said method comprising:

- a step of configuration (E0) of the cryptographic processing system, comprising the obtaining and memorization of said reference value (Co) in said cryptographic system, then
- a step of transmission (E10) of the memorized test (ChallR) to a user,
- a step of obtaining (E20) of a response (R') from the user to said transmitted test,
- a step of cryptographic processing (E30) based on the sensitive data item (P), using said obtained response (R'), said reference value (Co) and said cryptographic function (F),

said method being **characterized in that**:

- the configuration step (E0) is prior to the transmission step (E10),
- said reference value (Co) and said test (ChallR) are in memory of said cryptographic processing system during said transmission step (E10); and
- when said solution (R) is in memory of said cryptographic processing system during the configuration step (E0), it is deleted on completion of this configuration step, so that said solution (R) is not in memory of said cryptographic processing system during said transmission step (E10).

2. Processing method according to Claim 1, **characterized in that** said test is a CAPTCHA-challenge(ChallR) the solution to which is a CAPTCHA-response (R).

3. Processing method according to any one of Claims 1 and 2, **characterized in that** it furthermore comprises a step of obtaining (E5) a data item (P') entered by the user, and **in that** said cryptographic processing step (E30) comprises:

- a step of computation (E310) of a value (C) obtained by applying said cryptographic function (F) to a pair of values P' and R', where P' is said entered data item and R' is said obtained response, and
- a step of comparison (E320) of said computed value (C) with said reference value (Co), so as to verify that the entered data item (P') is equal to the sensitive data item (P).

4. Processing method according to Claim 3, **characterized in that** said cryptographic function (F) is a one-way function.

5. Processing method according to any one of Claims 1 and 2, **characterized in that** said cryptographic function (F) is an encryption function and said processing step (E30) comprises:

- a step of computation (E330) of a value (P*) obtained by applying a reciprocal function (G) of said cryptographic function (F) to a pair of values Co and R', where Co is said reference value and R' is said obtained entered response, and
- a step of encryption or decryption (E340) of a sensitive information item ($ENC_P(Data)$, $ENC_R(Data)$) using the computed value (P*) of the reciprocal function (G).

6. Processing method according to Claim 5, **characterized in that** said computed value (P*) of the reciprocal function is an encryption key used in the decryption step to decrypt the encrypted sensitive information item ($ENC_P(Data)$) stored in memory of said cryptographic processing system.

7. Processing method according to Claim 5, **characterized in that** said encrypted sensitive information item ($ENC_R(Data)$) to be decrypted is said computed value (P*) of the reciprocal function, the step of decryption of said computed value (P*) of the reciprocal function comprises the use of an encryption key based on said response obtained (R') from the user.

8. Processing method according to any one of Claims 5 to 7, **characterized in that** the cryptographic function (F) and its reciprocal (G) are asymmetrical encryption functions of which the pair of asymmetrical encryption keys is based on said solution (R) to the memorized test (ChallR).

9. Processing method according to any one of Claims 5 to 8, **characterized in that** said cryptographic processing system furthermore comprises in memory a message authentication code ($MAC_P(Data)$; $MAC_R(Data)$) applied to said sensitive information item (Data) and having for secret key said sensitive data item (P) or said solution (R), and **in that** said cryptographic processing step (E30) furthermore comprises:

- a step (E350) of computation of a message authentication code ($MAC_{P*}(Data')$; $MAC_{R'}(Data')$) applied to said decrypted sensitive information item and having for secret key said encryption key computed (P*) or obtained (R') by said cryptographic processing system, and
- a step (E360) of verification of the integrity of the sensitive information item decrypted by comparison of said memorized authentication code ($MAC_P(Data)$; $MAC_R(Data)$) with said computed authentication code ($MAP_{P*}(Data')$; $MAC_{R'}(Data')$).

**10.** Processing method according to any one of Claims 1 to 9, **characterized in that** it furthermore comprises a new iteration of the steps of transmission (E10), obtaining (E20) of a second response (R'2) and cryptographic processing (E30), using a second test making it possible to tell a human and a computer apart (ChallR2) having a second solution (R2) and of a second reference value (Co2) obtained by applying the cryptographic function (F) to a pair of values P and R2, where P is said sensitive data item and R2 is said second solution, said second reference value (Co2) and said second test (ChallR2) being in memory of said cryptographic processing system and said second solution (R2) not being in memory of said cryptographic processing system during said step of transmission (E10) of this new iteration.

**11.** Processing method according to Claim 10, **characterized in that** said second reference value (Co2) is computed from said reference value (Co) of the previous test and from said second solution (R2), without handling said sensitive data item (P).

**12.** Computer program comprising instructions for the implementation of a cryptographic processing method according to any one of Claims 1 to 11, when it is loaded and executed by a processor.

**13.** Medium readable by a processor, comprising the instructions of a computer program for implementing a cryptographic processing method according to any one of Claims 1 to 11.

**14.** Cryptographic processing system comprising:

- at least one memory (ROM) comprising a test making it possible to tell a human and a computer apart (ChallR) as well as the reference value (Co) obtained by applying a cryptographic function (F) to a pair of values P and R, where P is a sensitive data item and R is a solution to the test (ChallR),
- means (E0) of configuration of the cryptographic processing system, comprising means of obtaining and memorization of said reference value (Co) in said cryptographic system, prior to the transmission of said memorized test to a user,
- means (I/O) of transmission of said memorized test (ChallR) to a user,
- means (I/O) of obtaining a response (R') from the user to said transmitted test,
- processing means (CPU) configured to perform cryptographic processing based on the sensitive data item (P) using said obtained response (R'), said reference value (Co) and said cryptographic function (F),

said system being **characterized in that** it comprises in memory said reference value (Co) and said test (ChallR) when the transmission means (I/O) are implemented, and **in that** the configuration means are configured to delete said solution (R) on completion of their implementation when the system comprises in memory said solution (R) while the configuration means are implemented, so that the system does not comprise said solution (R) in memory when the transmission means (I/O) are implemented.

**15.** Processing system according to Claim 14, **characterized in that** it furthermore comprises means (I/O) of obtaining a data item (P') entered by the user, and **in that** said cryptographic processing means comprise:

- means (CPU) of computation of a value (C) obtained by applying said cryptographic function (F) to a pair of values P' and R', where P' is said entered data item and R' is said obtained response, and
- means (CPU) of comparison of said computed value (C) with said reference value (Co), so as to verify that the entered data item (P') is equal to the sensitive data item (P).

**16.** Processing system according to Claim 14, **characterized in that** said cryptographic function (F) is an encryption function and said processing means comprise:

- means (CPU) of calculation of a value (P*) obtained by applying the reciprocal function (G) of said cryptographic function (F) to a pair of values Co and R', where Co is said reference value and R' is said obtained response, and
- means (CPU) of decryption of an encrypted sensitive information item ($ENC_P$(Data), $ENC_R$(Data)) using an encryption key computed (P*) or obtained (R') by said cryptographic processing system.

Fig. 1

Fig. 2

Fig. 3

| Configuration (Co, ChallR) | E0 |
| Transmission de ChallR | E10 |
| Obtention de R' | E20 |
| Traitement cryptographique | E30 |

Système                                    Utilisateur

Configuration
(Co, ChallR)                    E0

E5    Obtention de
      P'                        ←    Saisie de P'

E10   Transmission
      de ChallR                 →    Réception de
                                     ChallR

E20   Obtention de
      R'                        ←    Résolution de
                                     ChallR

E310  Calcul de
      C'=F(P', R')

E320
Non   C' = Co          Oui      P' = P
      ?                   →      Authentification
                                 ok

Fig. 4

Fig. 5

| 0 | 1 | 2 | 3 | 4 | 5 | 6 7 | 8 | 9 |
|---|---|---|---|---|---|-----|---|---|
| 5 | 7 | 2 | 1 | 6 | 9 | 43 | 8 | 0 |

Système                    Utilisateur

Configuration
(Co, ChallR, ENCₚ(Data),        E0
MACₚ(Data))

E10
                                Réception de
Transmission                    ChallR
de ChallR

E20
                                Résolution de
Obtention de                    ChallR
R'

E330
Calcul de
P*=G(Co, R')

E340
Décryptage de
ENCₚ(Data)
avec P* : Data'

E350
Calcul de
MACₚ*(Data')

E360
                                        Data' = Data
Non    MACₚ*        Oui                 Intégrité ok
       = MACₚ
       ?

Fig. 6

21

Système                    Utilisateur

Configuration
(Co, ChallR,
MACR(Data))          E0

E10

Transmission          Réception de
de ChallR             ChallR

E20

Obtention de          Résolution de
R'                    ChallR

E330

Calcul de
P*=G(Co, R')

E340

Décryptage de
P*=ENCR(Data)
avec R' : Data'

E350

Calcul de
MACR'(Data')

E360

Non        MACR'
= MACR
?

Oui        Data'= Data
Intégrité ok

Fig. 7

**EP 2 772 869 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110296509 A